# EUROPEAN PATENT APPLICATION

(11) **EP 1 244 168 A1**
(43) Date of publication of application: **25.09.2002**
(21) Application number: 01810286.3
(22) Date of filing: 20.03.2001
(51) Int. Cl.: H01M 10/40, H01M 4/36, H01G 9/20, H01G 9/00, G02F 1/15

(54) **Mesoporous network electrode for electrochemical cell**

(71) Applicant: Francois Sugnaux, 1015 Lausanne (CH)
(72) Inventor: Sugnaux, François, 1807 Blonay (CH); Pappas, Nicholas, 1024 Ecublens (CH); Graetzel, Michael, 1025 St-Sulpice (CH)

(57) **Abstract**

A high kinetics rate electrochemical cell in which at least one of the electrodes is composed of a mesostructural electroactive material is comprising a three-dimensional framework structure of mesoporous texture forming a bicontinuous junction of large specific surface area with the electrolyte. The electrode material, which is suited for reversible ion intercalation and for electronic transport, is penetrated by an interconnected porous space filled with electrolyte the latter serving for ionic transport. The three dimensional framework structure of the electrode is designed in a manner to overcome impediment of ionic diffusion in the electrolyte encountered with conventional high surface area electrodes and to provide interconnectivity, mechanical stability of the solid phase as well as access of the electrolyte to the entire pore space. A low temperature method of preparation of the electrodes employs a high-speed deposition of the electrically active material in the form of a thin film. The application of said electrodes in high power lithium ion insertion batteries, photovoltaic cells, supercapacitors and fast electrochromic devices is disclosed.

## Description

### FIELD OF THE INVENTION

This invention relates to electrodes for electrochemical cells employing non-aqueous organic electrolyte, solid polymer electrolyte or the like and more particularly to porous electrode materials thereof, i.e. anode or cathode, featuring discrete doped or non-doped oxide, hydro-oxide or chalcogenide nanoparticles, optionally together with microparticles, in direct electrical and mechanical contact, that form a mesoporous network layer.
When an electrolyte is put in contact with this mesoporous three dimensional framework structure, it forms a bicontinuous junction of very large surface area with the electroactive solid, that provide excellent high-rate charge and discharge, a high capacity, high cyclability characteristics and high reliability for the safety aspect.
This invention also relates to processes for obtaining flexible electrodes of this type from the electrically active material selected, using in particular coatings at temperatures below 50° C of particles from a dispersed state mixed with low level of binder, followed by rolling and curing of the porous layer either at temperatures below 100° C, or between 100° C and 240° C.
Applications for these new porous electrodes include electrochemical devices e.g. high power batteries, photovoltaic cells, supercapacitors and fast electrochromic devices.

### DESCRIPTION OF PRIOR ART

Electrochemical cells have used electrode active materials linked by sintering or bonding at high temperature of micrometer-sized particles in supercapacitor, photoelectrochemical and electrochemichromic applications, as well as for ion insertion batteries.

European patent application EP 0 709 906 A1 discloses a positive electrode composed of a sintered mass of lithium cobalt oxide, the mean particle size of the electrically active powder being 33 µm. The particles are pressed into pellets of 1.5 mm thickness by applying high pressure with simultaneous baking at 350 to 700 °C. They report an improvement in the resistivity when baking at the elevated temperature presumably due to a degree of sintering within the active mass, thus improving somewhat the connectivity in the active material.

U.S.Pat.No. 5,604,057 discloses a cathode comprising amorphous microporous, sub-micron-size, lithium intercalateable manganese oxide having an internal surface area greater than about 100 m²/g. Electrodes are fabricated by mixing the oxide with a binder, containing optionally a conducting polymer and heating the composite material at a temperature up to 400 °C. The temperature was limited to this value to prevent crystallization of manganese oxide. The high surface area and the amorphous nature of the active material structure proposed seem to increase the initial capacity of fabricated electrodes but the connectivity is hindered. Interior connectivity of the particles is poor and therefore requires a binder and/or a conducting binder within the electrode fabrication mixture. Another drawback in electrode construction with the amorphous material is that the exposure to temperatures can alter its structure by crystallization, limiting the reported benefits arising from its amorphous structure.

U.S.Pat.No. 5,211,933 and 5,674,644 disclose a method for the low temperature preparation of the spinel LiMn₂O₄ and layered LiCoO₂ phases prepared at temperatures less than 400 °C using acetate precursors. The LiMn₂O₄ powder obtained comprises grains or crystallites ranging in size between 0.3 µm and 1 µm. Pellets are pressed containing this powder and about 10% carbon black and used as positive electrodes in lithium ion batteries. The particle sizes claimed are rather large to expect to suit high rate discharge electrodes and connectivity within the active material particles is not ensured by special bonding; the conductivity is enhanced by mixing in carbon powder to the active powder.

U.S. Pat. No. 5,700,442 discloses insertion compounds based on manganese oxide usable as positive electrode active material in a lithium battery, prepared by reacting β-Mn O₂ powder with a lithium compound at 150 to 500 °C for an adequate time to convert these solid precursors to a spinel type. The specific surface of the resulting powder is below 7 m²/g. The large particle sizes, as deduced from the low specific surface area claimed here are not suited for high rate discharge electrodes.

European patent application EP 0 814 524 A1 discloses a spinel-type lithium manganese complex oxide for a cathode active material of a lithium ion secondary battery. The average particle diameter is between 1 and 5 µm and the specific surface area between 2 and 10 m²/g. The large particle sizes, thus the low specific surface areas claimed here, are not optimum for high rate discharge electrodes.

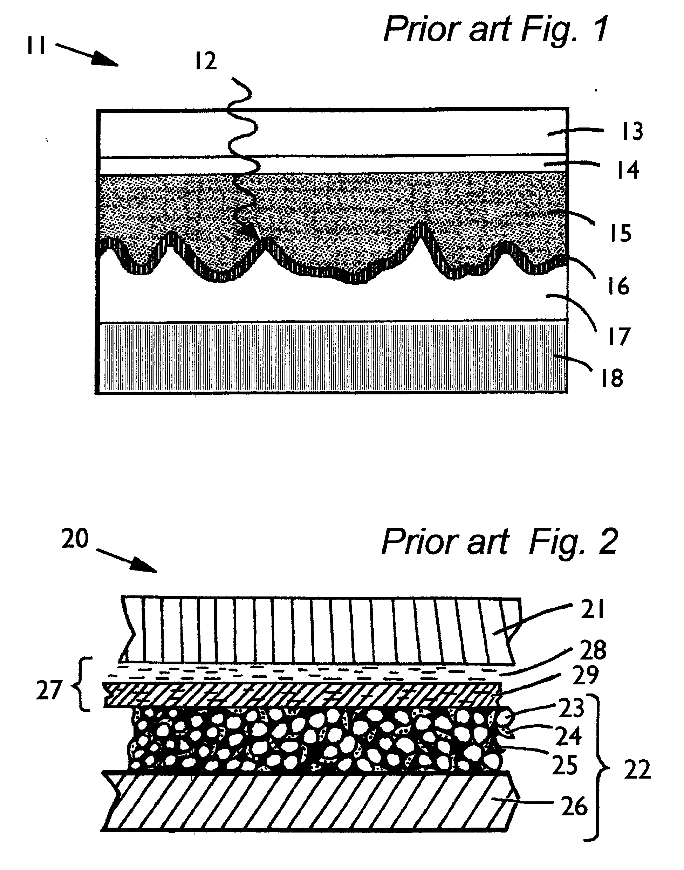

U.S. Pat. No. 5,569,561 discloses a process in which nanoparticles are compressed in the form of pellets with carbon powder and a polymeric bonding material, then dried at 160°C for 12 h; this process yield electrodes, illustrated in FIG. 2, in the form of brittle inflexible films, that are unsuitable for building conventional rolled-type batteries. With reference to FIG. 2, the electrode / electrolyte interface 23/29 of an electrochemical generator device 21 of previous art was limited to the low surface area of the electrode, wherein most of the accessible porosity of the electrode is dogged by the compressed binder. Furthermore, the active mass / electronic conductor interface 23/25 was partly interrupted by particles of the insulating binder 24.

European patent application 98810431.1-2111 describes a process involving sol gel precipitation and subsequent baking of the electrically active solid material. It discloses methods to produce the specific mesoporous morphology of the electrode, required for optimal performance of the electrochemical generator. It also discloses the use of surfactant assemblies as templates to induce the desired electrode texture during the formation of the electrically-active solid.
A similar process to make a rigid semiconductor film directly sintered on a conductive electrode has been used for all previous dye solar cell disclosures, see e.g. Pat. No. EP 333'641, illustrated in FIG. 1.
While the advantages of employing a mesoporous electrode morphology for the performance of lithium intercalation batteries has been recognized in these earlier disclosures, the high temperature sintering step involved in the preparation of electrically active films capable of sustaining electronic charge transport during charging and the rigid sintered interconnexion between nanoparticles limiting the application to rigid supports has restricted their realm of applications.
It is therefore the task of the present invention to provide for an electrochemical generator which is using nanoparticles having a high surface area allowing a mesoporous structure, but can be fabricated without the need to use such a high temperature sintering step and such rigid interconnexion.

### SUMMARY OF THE INVENTION

It has been unexpectedly discovered that a layer of discrete solid contacting nanoparticles that have not been sintered together by fusion or partial fusion at elevated temperatures can form a mesoporous framework structure that exhibits electrically active, ion intercalation and kinetic properties similar to that of a thermally sintered layer.
It has also been discovered that such mesoporous framework structure can be obtained from discrete solid nanoparticles in a dispersed state, which are brought together to form a stable layer in ambient temperature conditions, not requiring an immediate heating or cooling.

Briefly, the invention provides a novel and useful article of manufacture for an electrochemical device which includes at least one porous electrode layer made from solid discrete particles of which at least 10% are nano-sized (i.e. have a size below 50 nm), having a novel electrically active material structure based on nanoparticles in direct electrical contact constituting an electron conducting bicontinuous percolating network and held together by means of an interconnected binder network.

Accordingly, it is an object of the present invention to provide methods for preparing layers having a mesoporous framework structure from discrete nanoparticles in a dispersed state, at a low cost without using a complicated reaction apparatus.

It is a further object of the invention to provide a simple and convenient method for producing electrochemical devices having a novel composite electrode structure based on mesoporous framework structure constituting a bicontinuous percolating network stabilized by an interconnected network of cured polymeric binder.

### DEFINITIONS

As used herein, the term "mesoporous" refers to pore sizes from 2 nm to 50 nm, according to the definition of Union of Pure and Applied Chemistry (UPAC); materials with pore sizes exceeding 50 nm are denominated as "macroporous".

"The term "colloidal crystals" refers to particle matter composed of periodic arrangement hexagonal or cubic array of nanoparticles formed by self-assembly in the absence of additives. An example of natural colloidal crystal is opale.

The term "discrete" refers to distinct elements, having a separate identity, but does not preclude elements from being in contact with one another.
As used herein, the term "microparticle" refers to a grain or granule materials that form a single solid body of a size from 0.05 to about 30 microns, that can be a composite, but this term does not refer to aggregated particle bodies that are composed of many bodies that can be re-separated, for which the term "aggregate" is used, nor to a single solid body smaller than 50 nanometers for which the term "nanoparticle" is used herein.

The term "active" refers to a material that is reversibly involved in the electrochemical or photoelectro-chemical conversion process, either as ion intercalating or as a semiconductor sensitised by a dye or interfacing with a redox chromophore.

The term "interface" is understood herein to mean the transition zone between (i) the active material of an electrode and (ii) a transport material in its contact, used to transport ions, holes or electrons. The term "electronic" means dealing with electrons or positive holes, but not with ions. The term "electrolyte" means a transporter in a solid or liquid form of atoms, molecules or ions.
The term "sintering" used herein means generally that discrete particles are partially fused to be bonded and form a single solid body where discrete particles can no more be distinguished.

### BRIEF DESCRIPTION OF THE DRAWINGS

The features and advantages of the invention are further set out in the following examples, given by way of non-limiting example with reference to the appended drawings in which:
- FIG. 1: shows a schematic sectional view of prior art rough film dye-sensitized photoelectrochemical device made from sintered nanoparticles;
- FIG. 2: depicts a schematic sectional view of prior art composite nanoparticulate battery;

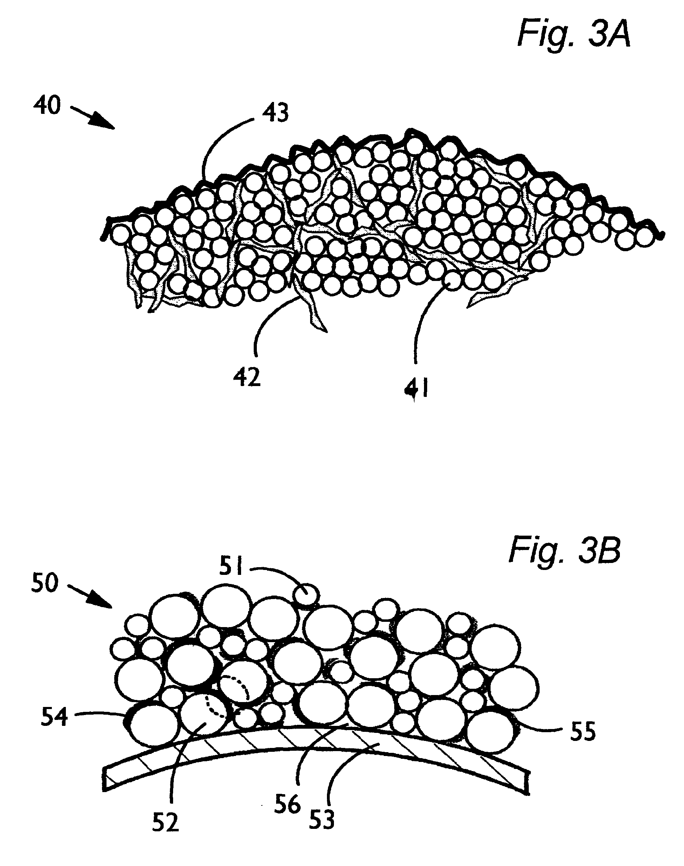

- FIG. 3A: depicts a schematic sectional view of a nanostructured electrode layer according to the invention, with an evaporated metal current collector; and
- FIG. 3B: is a schematic sectional view of an electrode layer of the invention comprising a bimodal particle size distribution, with nanoparticles and porous microparticles, coated on a flexible metallic current collector foil;
- FIG. 4: shows a sectional view of an electrochemical generator of the invention with (1,2) the active material mesoporous electrode layers, (3) the porous or mesoporous separator layer, (4,5) the current collectors.
- FIG. 5: shows cyclic voltammograms of a mesoporous TiO₂ deposited onto a copper foil, layer with alumina mesoporous overiayer. Electrolyte: EC:DMC 1:1, 1M Li-imide, Electrode: 4.5 micron TiO2 with Alumina separator; Total thickness: 9-10 microns sweep rate 20 mV/sec , ----- sweep rate 10 mV/sec
- FIG. 6: shows examples of electrolytes and their electrochemical properties used in the cell described above.
- FIG. 7: shows charge/discharge cycles of a cell composed of the electrodes under identical potential scan and common electrolyte, in an assembled secondary battery, in order to demonstrate the improved kinetics in the charge/discharge performance of said mesoporous multilayer system TiO₂/ Al₂O₃ /LiCoO₂, having TiO₂ / Al₂O₃ as anode with laminated separator layer in conjunction with LiCoO₂ as the active material for the positive electrode.
- FIG. 8: shows the electrolyte function at steady-state current of the thin layer mesoporous battery cell of the invention as given by the simulation model describing the electrolyte transport behaviour of a completely mesoporous cell, as function of the thickness of the active layer of the electrodes, by means of the concentration profiles of the Li⁺ ions and the coupling anion species within a multilayer design.

### DESCRIPTION OF THE INVENTION

The following sections describe, in tum, the relevant aspects of mesoporous layer behaviour, the electrode formation process, and devices formation using the process of the invention. These are followed by descriptions of examples of the process and the resultant products.

### 1. Mesoporous three dimensional network electrode structure and interfacing

As compared to these known features of the prior art, the invention provides an electrochemical cell in which at least one of the electrodes employed has a mesoporous framework structure made from nanoparticles and prepared by a method which does not require the thermal sintering of the electrically active particles.

The invention relates to a high power density electrochemical cell and more specifically to a cell in which at least one of the two electrodes is characterized by a mesoporous three-dimensional framework structure. The electrode is composed of solid particulate matter in direct electrical and mechanical contact, forming a mesoporous network layer that assures the flow of electric current throughout and across the layer. The electrode is associated with an electrical conductive means acting as a current collector. An electrolyte is present in the mesoporous network of said electrode forming a bicontinuous junction of very large surface area with the electroactive solid. The electrolyte provides for ionic transport between the negative and positive electrode of the electrochemical cell.

The morphology of the mesoporous electrode is designed to overcome the impediment of ionic diffusion in the electrolyte encountered with conventional high surface area electrodes. A three dimensional structure ascertaining electrical connectivity, mechanical stability and access of the electrolyte to the entire pore space is provided by the new morphology.
The invention provides an electrode having a large ion insertion capacity and high electric power density that makes it particularly suited for application as a cathode or anode hosting alkali or earth alkali insertion metal ions in a primary or secondary electrochemical generator, such as a lithium ion battery.

At least one of the electrodes consists of a mesoscopic, bicontinuous structure, composed of an interconnected solid material and of an interconnected network of mesopores. The electrically active solid can either be the host for accommodating ions by an insertion process or serve as a high surface substrate for the coating of an electroactive dye. At the same time, its intrinsic conductivity serves to sustain the flow of electric current during the electroactive operations of the device. Said electrically active solid is in contact with an interconnected porous space filled with electrolyte, the latter serving for ionic transport. Said electrode is characterized by the presence of an extremely large interface between the solid and the electrolyte, comprised between 10 and 3000 m2/g electrode material, permitting rapid exchange of ions between the solid and liquid phase. The reticulated architecture of the solid phase is designed to overcome the impediment of ionic diffusion in the electrolyte encountered with conventional high surface area electrodes. The specific three-dimensional structure of the electrode disclosed by the invention supplies interconnectivity and mechanical stability of the solid phase providing ease of access of the electrolyte to the entire pore space. Furthermore, it renders possible the conduction of electric current within the solid even in the absence of conductive additives, which are mixed with the electrically active material in conventional devices to enhance electronic conductivity of the electrode.

### 2. Electrode and electrochemical device formation

The electrically active material in the form of such a mesoscopic morphology is obtained, for example, by casting a colloidal dispersion of the solid particles on the conductive film serving as current collector.

A specific feature of the invention is that the electrode employed can be produced under ambient conditions by a process involving casting of the electrically active material from a dispersed state in the form of a thin film. The film contains the active electrode material, for example a metal oxide such as TiO₂ in the form of particles of mesoscopic size and a polymeric binder.

The latter is necessary to stabilize the film. The binder is added in a proportion not to isolate the particles from each other or to block the pores, but in a quantity sufficient to produce a percolating interconnected network extending throughout the layer. High molecular weight polymers were found to be particularly suitable for such a binder network. The electrical contact between the particles is necessary for electrons to flow in and out of the electrode during the charging and discharging of the electrochemical device. Isolation of the particles would result in the interruption of charge percolation through the electrode active layer, impairing the electronic circulation process. An important finding of the present invention is that the percolative flow of electrons across the network of mesoscopic oxide particles is effective without sintering the particles. Despite of the mild conditions employed for the assembly of the particles and the presence of the polymer binder material providing for the mechanical stability of the layer, high electric currents can flow across the layers rendering their operation as electrodes in the electrochemical devices feasible. This finding is very surprising to someone skilled in the art who would expect that the particles need to be fused together by heating to form a network that allows electric charge to move through it easily.

The casting of the films onto the carrier or current collector can be done at highspeed providing large-area of active electrode within a short time. This feature of the present patent disclosure is particularly important, as it is the goal of the present invention to provide for a battery composed of mesoporous materials that can be fabricated at high throughput at ambient temperature followed by the curing of the binding polymer under a mild heating.

In the casting mixture preparation step, mixing nanoparticles with a volatile carrier that does not dissolve the linking polymer or dye, for example water, dibutyl phthalate, dioctylphthalate, and acetates, hexylene carbonate , octylene carbonate, tributyl phosphate, decaline, glymes and low molecular weight polymers, is necessary for obtaining a composition with the desirable rheology, eventually cooling or heating the composition so as to provide for a coatable material.
Those skilled in the art will understand that some adjustment of the viscosity and rheological properties of the solution may be needed to accommodate a particular application technique and that such adjustment can be effected by varying the molecular weight and/or concentration of the carrier.

In the casting step, discrete particles can be coated onto a suitable substrate (e.g., a metallic or transparent conductive oxide electrode) by any method of deposition from a dispersed state, including: premetered coatings such as patch die coating, slot or extrusion coating, slide or cascade coating, and curtain coating; roll coating such as knife over roll coating, forward and reverse roll coating; gravure coating; dip coating; spray coating; meniscus coating; spin coating; brush coating; air knife coating; silk screen printing processes; electrostatic printing processes; thermal printing processes; ink jet; and other similar techniques. The premetered coating methods are particularly preferred for their high productivity.

The binder is a polymeric material which preferably is resilient and not brittle, chemically inert, temperature resistant, has a low coefficient of thermal expansion, is thermoplastic or can be polymerised or otherwise cured. A suitable binding material can be selected from the group of thermoplastic, chemically- or radiation- curable polymers. The binder should constitute no more than about 5 percent by weight of the electrically active particles, more preferably less than about 3 percent by weight of such particles.

Furthermore, intrinsically conductive polymers can be blended with or substitute previously mentioned non-conductive binders. They can be selected from the group consisting of: polyaniline, polythiophene, polyphenylene, polypyrrole, polyacetylene, polyisothionaphthene, poly(phenylene sulfide), poly(p-phenylene), polyethylenedioxythiophene (PEDOT), poly(phenylenevinylene), poly(heterocycle vinylene), conductive polyacrylonitrile, substituted derivatives thereof, co-polymers thereof and blends thereof.

The resulting flexible polymeric electrode layer can be either directly casted in a discontinuous mode on the final current collector, to space each electrode, or be continuously casted on a temporary carrier, then cut and contacted with a current collector in the form of a mesh or directly sputtered or evaporated onto the electrode active material.

The main advantage of such a process with regards to prior art is that it allows a wide variety of materials to be employed as support for the current collector, including metallized or metal-foil-laminated plastics that are heat sensitive and do not tolerate a high temperature sintering step. Heating the electrochemically-active host material is necessary in conventional ion insertion batteries to provide for electrical connection between the solid particles after their deposition onto a current collector.

The electrochemical cell provided by the present invention can be fabricated if wanted at temperature conditions below 100 °C, opening up new embodiments of said electrochemical cells, e.g. in flexible form on conventional plastic substrates.
As there is no need for a high temperature sintering step to make well performing electrodes made from discrete particles, in particular nanoparticles, these can be deposited on plastic materials opening up a realm of new applications.

### 3. Embodiment in electrochemical generators

Mesoporous electrodes of titanium dioxide (TiO₂) serving as anode in an electrochemical cell were prepared according to the invention by film casting a colloidal dispersion of TiO₂ particles. The TiO₂ powder employed, a mixture containing ca 30 percent rutile and 70 percent anatase, was P-25 obtained from Degussa corporation, Germany. The mean particle size was 25 nm, and the specific surface area 45 m²/g determined by BET analysis. An aqueous dispersion was prepared containing a weight percentage of 20 % in TiO₂ and this was stabilized by adding polyethylene oxide (Fluka molecular weight 100'000). The polymer weight content of the dispersion was about 20 times smaller than that of TiO₂. The dispersion was spread onto a copper foil serving as current collector by the doctor blading technique resulting in films of 4-20 micron thickness. The water was removed by applying a dry air stream at 60 -90 °C.. The dispersion is applied in concentrated form to the substrate. Its consistency is controlled by the proportion of water in the mixture and the effectiveness of ambient drying of the cast layer.

An electrode of this type having in its composition an electroactive material in the form of a mesoscopic morphology provides a high energy storage capacity and high power density and may be used in both primary and secondary electrochemical generators. The electrolyte used in such a generator is preferably one containing protons or lithium ions. Other alkali or alkaline earth metals may also be used. According to a preferred embodiment, the electrolyte contains lithium ions brought into the form of one of its salts such as tetrafluoroborate, hexafluorophosphate, hexafluoroantimonate, hexafluoroarsenate, trifluoromethane sulfonate, bis (trifluorosulfonyl) imide, tris (trifluorosulfonyl) methide, trifluoromethanesulfonate, trifluoroacetate, tertachloroaluminate or perfluorobutane sulfonate. According to the preferred embodiment, the solvent of the electrolyte is an aprotic solvent or a liquid salt, such as ethlyene carbonate, propylene carbonate, dimethylcarbonate diethylcarbonate, dioxolane, butyrolactone, methoxypropionitrile, methoxy-ethoxy propionitrile, methoxy-diethoxypropionitrile, methoxyacetonitrile, tetrafluoro-propanol or mixtures of these solvents. Another preferred embodiment of the invention uses a molten salt as a solvent for the lithium ion containing salt, such as methyl-ethyl-imidazolium trifluoromethansulfonate or methy-ethyl-imidazolium bis (trifluorosulfonyl) imide and corresponding di-methyl-ethyl-imidazolium salts with the above anions. The material used for at least one electrode in form of a mesoporous layer may be an electrically active material, but according to the preferred embodiment, this material is chosen so as to form an insertion compound with alkali or alkaline earth metals, thereby providing a secondary electrochemical generator. An electrically active material of this type will be chosen for example from the oxides or chalcogenides of transition metals or their lithiated or partially lithiated forms, such as TiO₂, Nb₂O₅, WO₃, MoO₃, MnO₂, Li_{y}Mn₂O₄, HfO₂, TiS₂, WS₂, TiSe₂, Li_{y}NiO₂, Li_{y}CoO₂, Liy (NiCo)O₂, or Sn_{y}O₂. According to the preferred embodiment of the invention, an electrode, which may be the cathode or the anode, depending on the electrical activity of the electrode used as the counter-electrode, is composed of mesoporous titanium dioxide in the form of anatase or rutile or in the form of a mixture of the two polymorphs. In the presence of lithium ions, the titanium dioxide in mesoporous form is prone to form an intercalation compound Li_{y}TiO₂ in which the intercalation coefficient has a high value between 0.6 and 0.8. For a cell in which y = 0.8 and where the counter-electrode is made of lithium metal, the theoretical energy density is 400 Wh /kg assuming a mean value of the cell voltage of 1.5 V. This high capacity is associated with a high value for the specific power, the later reaching values of 2.3 kW/kg. Results of this kind cannot be obtained with the technologies of the prior art, such as described by W.J. Macklin et al. (Solid state lonics 53 -56 (1992) 694-700) in which both the specific power and capacity of a conventional TiO₂ electrode is significantly lower.

When an electrically active compound also capable of inserting lithium ions is used for the other electrode, the electrochemical generator of the invention is a secondary (rechargeable) generator of the "rocking chair" type, the principles of which was described for the first time by M. Armand (Materials for Advanced Batteries, D.W. Murph et.al ed. Plenum press N.Y. 1980, p145). According to a preferred embodiment of the invention, the rocking chair configuration employs TiO₂ in the anatase structure as anode material, while Li_{y}Mn₂O₄ in amorphous or crystalline form is used for the cathode. The Li_{y}Mn₂O₄ (y ≤ 2) material disclosed by the invention is also present in the form of a mesoporous morphology, yielding cathodes of high capacity, i.e. close to the theoretical maxiumum of 280 Ah kg⁻¹. The overall capacity of such a TiO₂/ Li_{y}Mn₂O₄ rocking chair battery reaches up to 140 Ah kg⁻¹, the average cell voltage being 2 volts and the power density based on the material densities 2000 to 3000 W/kg. For such a TiO₂ / Li_{y}Mn₂O₄ rocking chair thin layer cell configuration power densities of 0.5 to 1.5 mW cm⁻² µm⁻¹ are observed.

The mesoporous electrode structure of the said cell configuration and the battery device as a whole also provide for improved local heat dissipation or exchange from the solid during high rate discharge, thus protecting potentially sensitive (active) materials of the battery from degradation, as exposure to extreme temperatures is minimized.

The mechanical strength of the electrode is enhanced by the presence of the polymer binder, leading to a structural toughness and robustness of the mesoporous network that can therefore sustain the capillary forces, i.e. not breaking under the intense local pressure when the pores are filled with electrolyte, and most importantly, able to support the strain and mechanical stresses resulting from the volumetric expansion/contraction resulting from the Li⁺ insertion/extraction process during the rocking chair battery operation, this particularly for the cathode. The later effect induces improved structural integrity on cell cycling, which produces enhanced cyclability as capacity fading due to active material disintegration and discontinuity (decreased electrical connectivity and conductivity) is minimized. Consequently, better solid phase connectivity is ensured with the above mentioned smaller sized "particles" or "grains" or described elemental structural units comprising the mesoporous electrode.

Judicious selection of the binder material renders it possible to achieve the desired stabilizing effect on the film at a relatively low weight percentage. Thus the paste formulation employed here consists of over 90 percent active material, the polymer content being less than 10 %. The fact that films prepared with such low polymer content are stable and display excellent activity as lithium ion insertion electrodes is particularly remarkable. Mesoporous electrodes prepared by conventional sintering methods require the presence of significant amounts of carbon in addition to a fluorocarbon polymer material. The carbon reduces the electrical resistance of the film while the polymer acts as a plasticizer. These materials add weight to the battery reducing its electric energy density and power density. The present invention provides for an electrode that functions well without the addition of carbon and plasticizers.

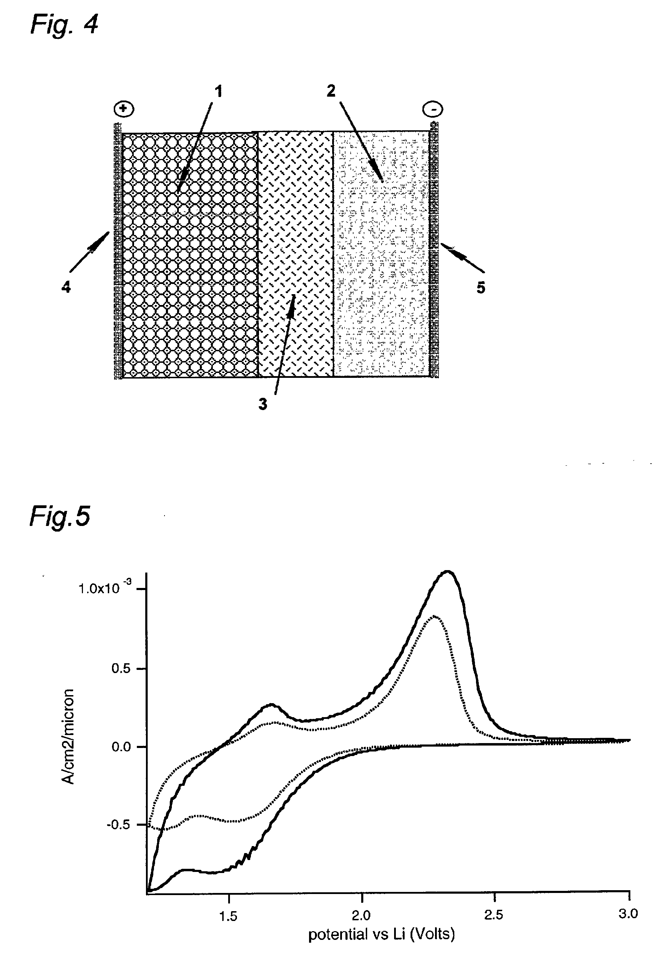

A further advantage of the present invention is that the porous inorganic membrane separating the two electrodes of the electrochemical cell as shown in FIG. 4, can be deposited jointly with the electrically active layer, which simplifies the production of the cell.

The preparation according to the preferred embodiment of the invention, results in a particle network that enhances the Li⁺ insertion kinetics as sufficient percolation paths are formed. The metal oxide layer density (and pore or future anhydrous electrolyte mass vs oxide mass ratio) can be controlled by solvent (e.g. water) dilution of the oxide dispersion and the aggregation state (oxide mass vs water) of the precursor solution applied. The full connectivity of the mesoporous space combined with the low tortuosity enables a lower porosity (higher active mass to void (for electrolyte) ratio) to be more effective with respect to the electrolyte function i.e. Li⁺ diffusivity.

The two proposed mineral electrodes instead of carbon or lithium metal offer safety in a battery device as the risk of explosion is virtually eliminated in the former case. The battery concept, as of the preferred embodiment of the invention described above, embodies the safety aspect by considering only non-water sensitive and low toxicity materials for electrode fabrication and for the electrolytes as well. Conventional carbon electrode surfaces are very reactive and especially so at high current rates, and require overcharge protection.

A number of laminated electrochemical cells such as depicted in FIG. 4 were prepared with compositions comprising ceramic nanomaterials and were tested for electrical and physical suitability of use. The following examples are illustrative of such preparation and use.

### EXAMPLE 1 Preparation of an aqueous titanium dioxide dispersion.

24.5 g of nanocrystalline TiO₂ (P-25, mainly anatase) obtained from Degussa-Hüls AG; Frankfurt am Main, Germany, were dispersed in 170 g deionized water at 40 °C by exposing the mixture to ultrasound for several minutes. The pH of the dispersion was subsequently adjusted to 4.5 by addition of aliquots of a solution of 1 weight percent KOH in water. The treatment with ultrasound was repeated and more water added to reach a final weight of 200g. The dispersion thus produced contained 12.5 weight percent TiO₂.

### EXAMPLE 2 Preparation of the paste for the coating solution.

65.04 g of the dispersion prepared as described in example 1 were mixed at a temperature of 40 °C with 7.2 g of deionized water. Subsequently a 7.5 weight percent aqueous solution of polyethyleneglycol (average molecular weight 100'000 obtained from Fluka Chemistry Inc., Buchs, Switzerland) was added and the total weight of the solution raised to 80 g by addition of water. Finally the solution was homogenized by treatment with ultrasound.

### EXAMPLE 3 Coating of single layer

The coating solution was cast onto a thin copper foil laminated onto a thin transparent polyethylene-terephthalate carrier to give a loading of 100g paste per square meter of support area. Subsequently, the coated layer was dried at 30 °C for 60 minutes. The final loading of the carrier was 10 g TiO₂ /m² and 0.4 g polyethyleneglycol / m².

### EXAMPLE 4 Coating of superposed layers

14.5 g of Alu C (containing 96.6 % weight percent of Al₂O₃ obtained from Degussa-Hüls AG; Frankfurt am Main, Germany was dispersed at 25 °C in 62.9 g deionized water and 0.2 g aqueous lactic acid (90%weight). After stirring for 60 minutes, 15.47 g of an aqueous solution of polyvinyl alcohol were added (7.5 weight percent, degree of hydrolysis 98 - 99 %, molecular weight 85'000 - 146'000, obtained from Aldrich Chemicals). Deionized water was added to give a final weight of 100 g and the solution was homogenized by ultrasound.
This coating solution was cast at 40 °C onto the layer prepared by the method as described in example 3 to give a loading of 40g/m2 and the two superposed layers were dried for 60 minutes at 30 °C. Apart from the coating additives, one square meter of coated superposed layers is loaded by 4.5 g TiO₂, 0.18 g polyethyleneglycol (PEG), 6.04 g Al₂O₃ and 0.76 g polyvinylalcohol (PVA).

### EXAMPLE 5

An embodiment of a secondary electrochemical generator of the "rocking chair" type has been composed from TiO₂/LiCoO₂ negative and positive electrodes respectively in a cell configuration depicted in FIG. 4. The mesoporous layers are deposited on electrically conducting means serving as current collectors. Such a device displays 20C (or C/0.05) discharge rate under short circuit.
According to a preferred embodiment, a battery cell of 30 cm² formed by 10 micron mesoporous layers each of the abovementioned active materials comprising a separator of pure cellullose paper of 30-40 microns and utilizing an electrolyte comprising methoxypropionitrile and lithium bis-(trifluorosulfonyl) imide, is observed to sustain a 10C (or C/0.1) discharge rate and maintain a cell voltage of 1.8 to 1.5V, resulting in power densities above 1500 W/kg and energy densities above 210 Wh/kg.

### EXAMPLE 6

The porosity of a typical electrode layer of 4 µm to 20 µm thickness formed from nanosized oxides has been estimated to be between 30% to 70%, by mass to surface measurements. FIG. 5 shows the charge/discharge behaviour of a multilayer configuration anode comprising 4.5 micron TiO₂ overcoated with a mesoporous alumina Al₂O₃ layer prepared according to the method disclosed in example 4. The total thickness of such an electrode is 9-10 µm.
This combination of anode active layer and separator, an Al₂O₃/TiO₂ multilayer electrode, is composed from a 4.5 µm thick charge percolating porous layer of TiO₂ (P25) containing 4% PEG 100k as binder and from a 5 µm thick separator layer (electrically insulating, but ion conducting) of Al₂O₃ containing 12.6 % PVA as binder. The current collection from the active layer is made by a film of copper laminated on a PET flexible substrate. The electrolyte composition is a 1 : 1 weight ratio mixture of ethylencarbonate and propylene carbonate containing 1M lithium-bis-(trifluorosulfonyl)imide salt. The potential scan rates of 10 and 20 mV/s are depicted in FIG. 5.
The presence of the alumina layer increases the charge and discharge currents for Li⁺ intercalation/extraction, as compared to the same anode active material without the alumina mesoporous covering layer. The incorporation of a mesoporous overlayer on either or both electrode active layers, in the function of an inert and electrically insulating separator between anode and cathode, is demonstrated here.
It appears very distinctly for our system that a demonstrated higher reversibility in the intercalation kinetics in comparison to the earlier materials and designs, is attainable by decreasing the particle size to the nanometer range and simultaneously ensuring effective particle connectivity. The electrolyte operation and Li⁺ transport during charge and discharge is enhanced, resulting in lower resistive losses in the electrolyte and higher Crate capability. The active material appears to be less resistive and with increased electrochemical reversibility and the capacity much higher due to the effective interconnectivity and mesoporous structure formation.

### EXAMPLE 7

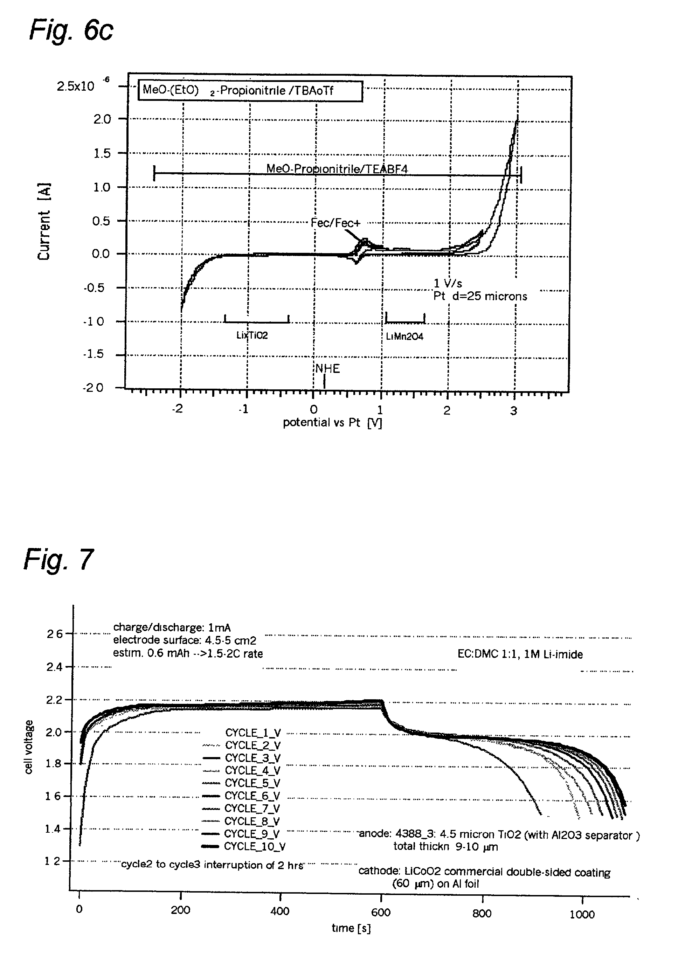

The preferential kinetics are also exemplified by the assembly of a complete cell consisting of a LiCoO₂ electrode cathode active layer (double side coating of 60 µm on a 20 µm thick A1 foil current collector) and the above described anode, according to the preferred embodiment, in Example 6. Assembly was carried out by matching each cathode side with an individual anode. The two anode parts are electrically connected to form one electrode of the above secondary battery. The charge/discharge conditions are indicated on the graph in FIG. 7, which shows the cycling behavior of the complete cell. The charge/discharge current is 1mA with an electrode surface of 4.5-5 cm², a capacity estimated at 0.6 mAh which corresponds to 1.5-2 C rate for the charge and discharge. The electrolyte composition is EC:DMC 1:1 containing 1M lithium-bis-(trifluorosulfonyl) imide salt.

### EXAMPLE 8

Thin layer cell ionic transport conditions at steady-state are modelled for the mesoporous electrode intercalation cell. The cell configuration consists of two 1 mm thick lithium intercalation mesoporous hosts separated by a 20 µm thick inert and insulating (meso-)porous spacer, one of the active material layers acting as the insertion and the other as the de-insertion (lithium extraction) electrode. The initial electrolyte concentration in monovalent lithium salt is 1M and the free stream diffusion coefficient for Li⁺ in the electrolyte corresponds to the case of propylene carbonate (3 10⁻⁶ cm²/s) of approximately 3 cP.

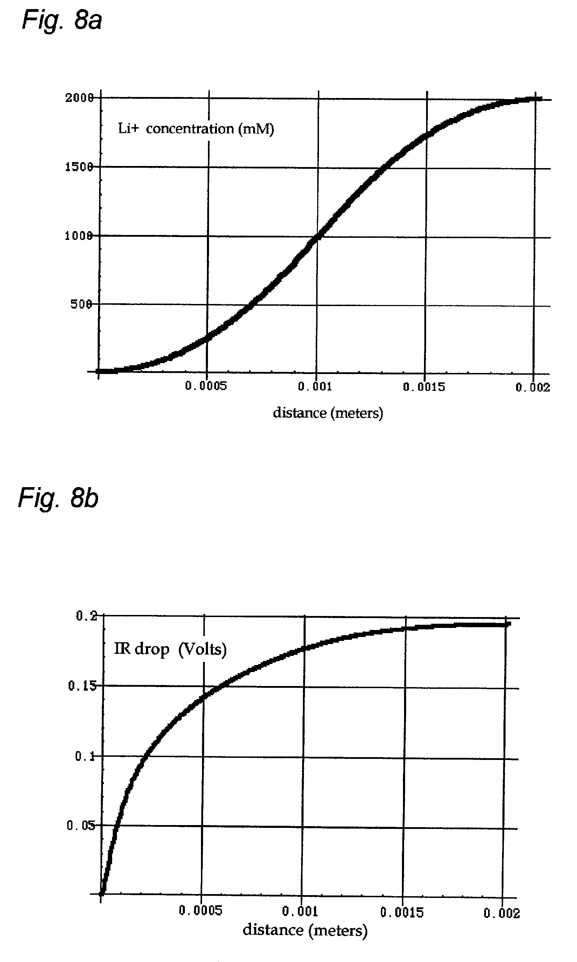

In the depicted results of the model the concentration profile of the Li⁺ (also the overlapping curve for the anion) appears in FIG. 8a and the potential drop across the cell in FIG. 8b when approx. 6 mA/cm² are passing through the cell, the minimum current limiting the supply of Li⁺ to one side of the intercalating electrode. The conductivity of the host solid is not considered here. The electrode porosities are 50% and 90% for the separator layer.
Any layer thinner than 1000 µm (1 mm) would increase the limiting currents. It is noted that the absence of supporting electrolyte in this case aids the lithium ion diffusion or transport but at a cost of potential in the form of I*R drop across the cell (here just under 0.2 V, as depicted in the FIG. 8b. This calculation reveals that for electrodes of 10 µm in the above configuration, currents as high as 500 mA/cm² are possible as far as electrolyte performance is concerned.
In addition, the TiO₂ / cellulose paper / Li_{y}Mn₂O₄ cells, with active mesoporous layers of about 10 µm, could deliver more than 5mA / cm² at short circuit, with molten salts containing 1-2 M lithium - bis (trifluorosulfonyl) imide that has a much higher viscosity (>40 cP) than in the propylene carbonate case, and thus a lower Li⁺ diffusion coefficient.

### EXAMPLE 9

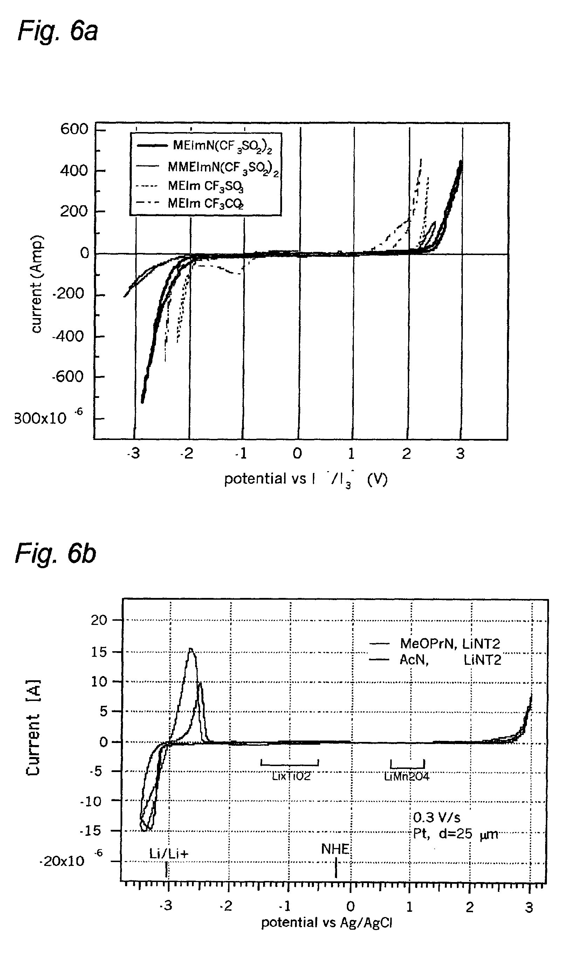

From the viewpoint of electrolyte investigation and characterization the quest for properties is generally low viscosity, low volatility, solubility of the lithium salt electrolytes and electrochemical stability/chemical compatibility with the electrode materials. Ionic liquids were synthesized, which at room temperature have very attractive features in the above respects. Their electrochemical stability limits fulfil the requirements for 4V cathode materials, as seen from the examples shown in FIG. 6a. The potentials are expressed versus iodide / tri-iodide which is +0.15V vs AgCI. Di-methyl-ethyl-imidazolium imide offers the best cathodic stability advantages.

Solubility of more than 2M lithium-bis (trifluorosulfonyl) imide can be reached in methoxy-diethoxy propionitrile and in methoxypropionitrile. The electrochemical stability of this newly synthesized organic solvent as evidenced by the electrochemical window is given in FIG. 6b. The corresponding stability range for methoxypropionitrile is depicted by the bar in this figure, and the operation limits of the lithium hosts TiO₂ and lithium manganate are positionsed against this scale (ferrocene potential is +0.4V vs AgCI) in FIG. 6c.

These molecular structures are designed to exploit the strong solvating properties of the ether groups toward Li⁺, combined with the low viscosity for Li⁺ diffusion and the relatively high boiling points of these compounds to decrease their volatility. Methoxy-ethoxy-propionitrile having a viscosity of 2.7 cP has also been synthesized, while methoxypropionitrile exhibits a viscosity of 1.1 cP and methoxy-diethoxy propionitrile 5 cP. Their boiling points at 10mm Hg are respectively 240° C, 165°C and 152°C.

### EXAMPLE 10

A secondary electrochemical generator of the "rocking chair" type with TiO₂ / Li_{y}Mn₂O₄ negative and positive electrodes respectively was obtained as described in Example 5, excepted that the separator layer (No 3 in FIG. 5) was made from a mesoporous zirconia layer of 8 micron thickness and 60% porosity. This zirconia layer prepared as described by P.Bonhote et al., *J.Phys.Chem.B.* (1998), 102, 1498-1507, displayed performance characteristics matching those of alumina disclosed in Example 5.
However, for the filling of electrolyte in an assembled cell, this mesoporous separator offers advantages for penetration and effective retention of the electrolyte within the mesopores. Thus, the effective retention of the electrolyte within the cell as a whole during charge/discharge operation uses the same mechanism as when gas is displaced from the space of the said cell on electrolyte filling. Furthermore, for effectively **accommodating** of **volumetric** changes on charge/discharge cycling, the mesoporous electrodes and saparator layers allow for electrolyte movement, but force gas expulsion from the cell layers(1,2,3 in FIG. 5) by capillary filling of the pores by the liquid electrolyte.

### EXAMPLE 11 Flexible electrochromic display device.

A transparent mesoporous electrode consisting of a network of interconnected semiconducting TiO₂ nanocrystals (average size 15 nm) was deposited onto a transparent conductive polymer (polyester, covered with indium tin oxide) according to the method described by example 3. The TiO₂ film thickness was 4 micron. Because the small size of the oxide crystals is in the nanometer range, the film has an extraordinary large internal surface area. The roughness factor approaches about 500 for the 4-micron thick layer. A second porous insulator film of 5 to 10 micron thicknes consisting of nanocrystalline Al₂O₃ particles (size ca 20 nm) was deposited on top of the first layer as described in example 4. The film was immersed for two hours into a 2 x10⁻⁴ M solution of N-methyl,N'-carboxypropylviologen in ethanol to adsorb a molecular layer of the viologen derivative on the surface of the TiO2 nanocrystals. The viologen acts as an electron relay. While uncolored in the oxidized state it turns blue upon reduction. In a simlar fashion a mesoporous electrode consisting of a network of interconnected conducting SnO₂ nanocrystals (average size 10 nm) was deposited onto a transparent conductive polymer (polyester, covered with indium tin oxide) according to the method described by example 3. The SnO₂ layer thickness was 5 micron. Because the small size of the oxide crystals is in the nanometer range, the film has an extraordinary large internal surface area. The roughness factor approaches about 750 for the 5-micron thick layer. The film was immersed for two hours into the phosphonated phenothiazine, for which the structure is given below. The phenothiazine self-assembles into a molecular layer at the surface of the SnO₂ nanocrystals under these conditions. The phenothiazine acts also as an electron relay. While uncolored in the reduced state it turns blue upon oxidation.

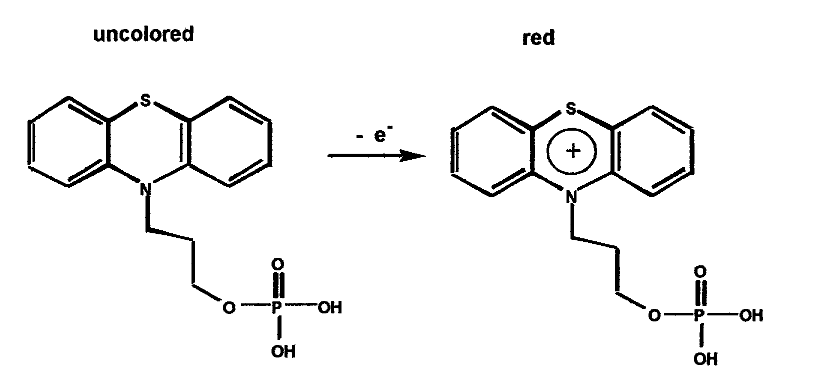

After filling the pore volume of the two films by the room temperature molten salt electrolyte N-methyl,N-ethyl-imidazolium bistriflylimide they are laminated in a sandwich-type fashion forming the electrochromic cell and sealed. The device is switched within less than a second from an uncolored to a deeply colored state (optical absorbance in the visible range close to 1) by application of a potential difference of 1.2 V to the two electrodes leading to reduction of the viologen at the cathode and oxidation of the phenothiazine at the anode. The color of the film is bleached by reversing the potential. This cycle can be repeated many thousand times without significant degradation of performance. A memory effect lasting for more than 500 s is furthermore observed at open circuit following coloration.

### References cited:

1. P. Barboux, J.M. Tarascon and F.K. Shokoohi, J. Solid State Chem., 94[1],185-196 (1991).
2. C. Barriga, A. Calero, J. Morales and J.L. Tirado, React. Solids, 7, 263-271 (1989).

## Claims

1. An electrochemical cell comprising at least an electrode which is composed at least of:
• (a) a first electrode active material that exhibits a mesoporous porosity, as measured by nitrogen porosimetry using the desorption isotherm, wherein the electrode active material is characterized as being composed from discrete solid contacting nanoparticles that have not been sintered together by fusion or partial fusion at elevated temperatures;
• (b) a curable organic binder; and
• (c) an electrical conduction means operatively associated with the electrode active material.

2. An electrochemical cell comprising at least an electrode which is composed at least of:
• (a) a first electrode active material comprising an oxide, chalcogenide, hydroxide, oxyhydroxide, oxo-acid, oxohydride or thiocyanic add of non-transition or transition metals, or their lithiated or partially lithiated forms selected from the group consisting of Group IB, IIA, IIB, IIIA, IVA, IVB, VA, VB, VIB, VIIB and VIII elements of the Periodic Table of Elements, and blends thereof, that exhibits a mesoporous porosity, as measured by nitrogen porosimetry using the desorption isotherm, wherein the electrode active material is characterized as being composed from discrete solid contacting nanoparticles that have not been sintered together by fusion or partial fusion at elevated temperatures;
• (b) an curable organic binder;
• (c) an electrical conduction means operatively associated with the electrode active material.

3. An electrochemical cell comprising electrodes including different electrode active materials connected together by an electrolyte and an electrical conduction means operatively associated with the electrode active material, wherein the first electrode active material used in the composition of at least one electrode comprises a bimodal particle size distribution of discrete solid contacting particles comprising at lest 10% by weight of nanoparticles having an average size of less than 50 nm and microparticles having a size above 50 nm, stabilized by a curable organic binder, that form a layer exhibiting a mesoporous porosity, as measured by nitrogen porosimetry using the desorption isotherm, and having a specific surface area of 0.1 m² /g to 500 m² /g.

4. An electrochemical cell comprising at least:
(a) a mesoporous electrode being composed of nanoparticles exhibiting an electrochemical activity and self-assembled to form colloidal crystals, said crystals being formed of an hexagonal or cubic array of uniformly sized particles;
b) a curable binder stabilizing the electrode.

5. An electrochemical cell according to any of claims 1 to 4 **characterized in that** it has been casted from a liquid or colloidal dispersion of nanocrystalline oxide, chalcogenide, hydroxide, oxyhydroxide, oxo-acid, oxohydride or thiocyanic acid of non-transition or transition metals, or their lithiated or partially lithiated forms deposited at a temperature between 5 °C and 60 °C together with a binding agent on a support to produce an electrically conducting film, said film being subsequently dried at a temperature below the boiling temperature of the liquid used to prepare the dispersion, the preparation procedure avoiding exposure of said film to higher temperature.

6. An electrochemical cell according to any of claims 1 to 5 wherein the first electrode active material is composed of discrete nanoparticles that are assembled as discrete contacting particles to form a mesoporous reticulated three dimensional bicontinuous structure consisting of:
- an electrically interconnected solid phase material used as electrochemical mediator and for electronic transport, which is in contact with
- interconnected inter-particular space filled with electrolyte used for ionic transport.

7. An electrochemical cell according to any of claims 1 to 6 wherein the electrode active layer is cast together with a second inactive layer, serving as a porous separator to prevent direct contact and short circuiting of the positive and negative electrode constituting the electrochemical cell, said separator being selected from an insulating ceramic material, such as Al₂O₃, SiO₂, silanized silica, ZrO₂, Ta₂O₅ or LiLa_{0.35}Ti_{0.55}O₃.

8. An electrochemical cell according to any of claims 1 to 7 comprising an electrode, consisting of at least one electrode active layer, said layer being composed of nanocrystalline transition metal oxide or chalcogenides or their respective lithium insertion compounds and an insulating separator layer, **characterized in that** said layers contain a binding agent.

9. An electrochemical cell according to any of claims 1 to 8 wherein said organic binder is used in a proportion of 0.5% to 10% of the weight of said particles and is composed of a polymeric material, with a glass transition temperature of at least 50° C, selected from the group of polymers consisting of: polyvinylidene fluoride, polytetrafluoroethylene, fluororubber (which is a terpolymer of tetrafluoroethylene, vinylidene fluoride and hexafluoropropylene), polyvinyl polymers such as polyvinylpyrrolidone, polyamides, polyurethanes; ethylene acrylic acid (EAA) copolymers, ethylene methacrylic acid (EMAA) copolymers, polyethylene (PE), polypropylene (PP), ethylene-propylene-diene terpolymers (EPDM), polyalkylene oxides, polybutylene, ionically cross-linked ethylene methacrylic acid copolymer, ethylene n-butyl acrylate (EnBA) polymers, ethylene vinyl acetate (EVA) polymers, ethylene ethyl acrylate (EEA) copolymer, ethylene methyl acrylate (EMA) copolymer, bisallylnadiimide or allylnadiimide, polysulfones, polyethersulfones, polyimides, polyamide-imides, epoxy resins, polyarylene ether ketones such as chloromethylated polyarylene ether ketones, acryloylated polyarylene ether ketones, polyacrylonitrile, a nitrile rubber, an ethylene-propylene rubber, a styrenebutadiene rubber, polyetherimides, polystyrene, cholromethylated polyethersulfones, acryloylated polyethersulfones, polymethyl methacrylate, a polysulfide rubber, cyanoethyl cellulose, methyl cellulose, and oligomer and blends thereof.

10. An electrochemical cell according to any of claims 1 to 9 wherein said curable organic binder is further blended or substituted with an electronic conductive material selected from the group consisting of a non-doped or doped intrinsically conductive polymer, polythiophene, polyphenylene, polypyrrole, polyacetylene, polyisothionaphthene, polyaniline, polyethylenedioxythiophene (PEDOT), poly(phenylenevinylene), electrically conductive ladder polymer formed from acrylonitrile and the like, substituted derivatives thereof and co-polymers thereof, a conductive particle, carbon black, fine particles of carbon, of graphitised carbon, of graphite, acetylene black, carbon whiskers, carbon nanotubes, fullerenes, highly conductive colloidal metals and doped metal oxides, alloys of said metals, metallic nano-fibers, and mixtures thereof.

11. An electrochemical cell according to any of claims 1 to 8 wherein said curable organic polymeric binder is formed in situ from monomer precursors selected from the group of thiophene, phenylene, pyrrole, acetylene, isothionaphtene, aniline, ethylenedioxythiophene, phenylenevinylene, acrylonitrile, non-doped, doped, substituted derivatives thereof and co-polymers thereof, by electrochemical or chemical polymerization.

12. An electrochemical cell according to any of the claims 1 through 11 **characterized in that** the electrode active layer and optionally the insulating separator layer containing the binder material are cast from a dispersed state to yield an assembly of mesoscopic particles **characterized in that** the subsequent curing of said particles to produce a mechanically stable, interconnected three dimensional network is assisted by electromagnetic radiation, the wavelength of said electromagnetic radiation being selected from a range which is most effective to bring about the desired curing effect.

13. An electrochemical cell according to any of the claims 1 through 12, **characterized in that** the curing of the electrode active layer and separator layer is assisted by UV radiation and ozone.

14. An electrochemical cell according to any of the claims 1 to 13, wherein the electrode active layer and optionally the separator layer are cast from a liquid or colloidal dispersion of nanocrystalline oxide, chalcogenide, hydroxide, oxyhydroxide, oxo-acid, oxohydride or thiocyanic acid of non-transition or transition metals, or their lithiated or partially lithiated forms, **characterized in that** the casting of said layer containing the binder is carried out at a temperature below 60 °C on a electrically conducting support to produce a mesoporous particle network suited for the use as electrode in an electrochemical cell , said mesoporous electrode being subsequently dried at a temperature below the boiling temperature of the liquid used to prepare the dispersion.

15. An electrochemical cell according to any of the claims 1 to 14, **characterized in that** the curing of the electrode active layer and separator layer is promoted by the optical excitation of the particles itself that constitute the layer, said optical excitation resulting in an electronic transition generating electron and hole pair charge carries within the particles, said charge carriers reacting subsequently with the binder or another additive in a way to reinforce the crosslinking of the particle network.

16. An electrochemical cell according to any of the claims 1 to 15, **characterized in that** the mechanical strength and electronic interconnectivity of the mesoporous electrodes and the separating layer is enhanced by applying pressure after the casting of said layer.

17. An electrochemical cell according to any of the claims 1 to 16, **characterized in that** the electrically conductive means employed as a current collector is deposited on a plastic support endowing the electrode with mechanical flexibility, the deposition of the mesoporous electrode active layer and the insulating separator layer being accomplished at temperatures below 240 °C..

18. An electrochemical cell according to any of claims 1 to 17 wherein said electrode active material is doped by substitution or a solid solution, wherein from 0.2% to 49% of the atoms of the non-transition or transition metal are substituted by another transition or non-transition metal selected from the group consisting of Group IB, IIB, IIIA, IVA, IVB, VA, VB, VIB, VIIB and VIII elements of the Periodic Table of Elements, and blends thereof, wherein the electrode potential of said doped electrode active material is shifted by more than 0.05 V vs. pristine electrode active material and the fusion point of said doped electrode active material is shifted by more than 10° C vs. pristine electrode active material.

19. An electrochemical cell according to any of the claims 1 to 18, comprising a solid flexible mesoporous electrode of high surface area.

20. An electrochemical cell according to any of the claims 1 to 19, **characterized in that** said mesoporous electrode is used as an electrode for a high power ion insertion battery.

21. An electrochemical cell according to any of the claims 1 to 19, **characterized in that** said mesoporous electrode is used as an electrode for a high power supercapacitor

22. An electrochemical cell according to any of the claims 1 to 19, **characterized in that** said mesoporous electrode is used as an electrode for a hybrid cell comprising a supercapacitor electrode and an ion insertion battery electrode.

23. An electrochemical cell according to any claims 1 to 18 wherein the surface of said electrode active material is modified by an attached monolayer of a sensitizing dye or adsorbed redox chromophore.

24. An electrochemical cell according to any of the claims 1 to 19, **characterized in that** said mesoporous electrode supports a molecular layer of a charge transfer sensitizer and the application of said dye-derivatized meoporous electrode in a photovoltaic cell.

25. An electrochemical cell according to any of the claims 1 to 19, **characterized in that** said mesoporous electrode supports a molecular layer of an electrochromic compound and its application in an electrochromic device.

26. An electrochemical cell according to claim 3 **characterized in that** it is employed in an ion insertion battery capable of delivering current in a biphasic manner.

27. An electrochemical cell according to any of the claims 1 to 26, **characterized in that** said mesoporous electrode has been coated with an electrically conductive metal or metal oxide layer deposited by a coating method selected from evaporation, sputtering, metallic powder blasting and metallic powder printing.
